# EUROPÄISCHE PATENTSCHRIFT

(11) **EP 2 460 940 B1**
(45) Veröffentlichungstag und Bekanntmachung des Hinweises auf die Patenterteilung: **11.07.2018**
(21) Anmeldenummer: 11401653.8
(22) Anmeldetag: 01.12.2011
(51) Int. Cl.: E02F 3/88, E02F 3/90, E03F 1/00, B60P 3/22, F16H 7/00, F04D 17/16, F04D 25/02, F04D 25/16, F16H 7/02

(54) **Ventilatorkaskade für einen Saugbagger**
Fan unit for a suction dredger
Unité ventilateur pour une drague aspiratrice

(30) Priorität: 02.12.2010 DE 102010060971
(43) Veröffentlichungstag der Anmeldung: 06.06.2012
(73) Patentinhaber: Zenner Ventilatoren GmbH, 09526 Olbernhau (DE)
(72) Erfinder: Zenner, Ulf, 09526 Olbernhau (DE)
(74) Vertreter: Thomas, Matthias

(56) Entgegenhaltungen:
- DE-U- 1 802 811
- DE-U1-202005 006 671
- DE-U1-202005 008 785
- JP-A- 2004 270 160
- US-A1- 2007 014 661
- US-A1- 2009 191 069

## Beschreibung

Die Erfindung betrifft eine Ventilatorkaskade für einen Saugbagger. Sie betrifft insbesondere eine Ventilatorkaskade für einen Saugbagger, die Steuerungsmöglichkeiten zum Erleichtern des Anfahrens sowie während des Arbeitszyklus vorsieht, damit beim Anfahrvorgang die Belastung der Antriebsmaschine und des Antriebsstranges gering gehalten werden kann und während des Arbeitszyklus unverhofft eintretende Störungen von der Antriebsmaschine, dem Antriebsstrang und dem Saugstrom von der Ventilatorkaskade femgehalten werden.

Saugbagger, die mit einem Luftstrom Baggergut ansaugen, sind bekannt. Sie dienen vor allem dazu, komplizierte Schachtarbeiten zu unterstützen, die bis dahin manuell ausgeführt werden mussten.

Hierzu wird gewöhnlich über eine Saugleitung, an der ein Saugrüssel oder eine Sauglanze angeordnet sind, lockeres Gut oder Flüssigkeiten angesaugt, im Abscheider des Saugbaggers wieder vom Transportmedium Luft getrennt und abgelagert.

Die gattungsgemäßen Saugbagger bestehen deshalb wenigstens aus einem Antriebsorgan, das ein Sauggebläse antreibt, welches den erforderlichen Luftstrom erzeugt, und einer Abscheideeinrichtung, die angesaugte Feststoffe oder Flüssigkeiten vom Luftstrom trennen kann.

Ein solcher Saugbagger ist beispielsweise in DE 38 37 670 A1 beschrieben.

Die gattungsgemäßen Saugbagger werden gewöhnlich auf dem Fahrgestell eines Lastkraftwagens aufgesattelt.

Bei Saugbaggern dieser Art gibt es verschiedene Entwicklungszielstellungen und technische Beschränkungen. Prinzipbedingt ist es notwendig, einen energiereichen Luftstrom zu erzeugen, damit an der Saugstell trotz aller bauartbedingt n Strömungswid rstände immer noch ein ausreichender Unterdruck gepaart mit in r hohen Strömungsgeschwindigkeit vorhanden ist. Damit soll die Arbeitsleistung des Saugbaggers erhöht oder aber eine Verlängerung der Saugleitung ermöglicht werden, da Standort des Saugbaggers und tatsächlicher Arbeitsort häufig nicht identisch sind.

Ein großer Volumenstrom und eine hohe Strömungsgeschwindigkeit sind erforderlich, um größere Stücke, die im Baggergut vorkommen, sicher bis zum Abscheider für das Baggergut zu transportieren. Um diesen Anforderungen gerecht werden zu können, werden Saugbagger mit Ventilatoren ausgerüstet, die eine hohe Leistungsaufnahme haben. Nach einer Angabe aus DE 20 2005 008 785 U1 kommen dafür Ventilatoren mit einer Anschlussleistung zwischen 100 kW und 1.000 kW in Frage.

Aus dem Erfordernis, einen hohen Unterdruck am Saugrüssel oder an der Sauglanze auch bei einer längeren Saugleitung zu erreichen, ergibt sich die Notwendigkeit, ein mehrstufiges Gebläse als Sauggebläse einzusetzen.

Bel Saugbaggern tritt jedoch ein neues Problem auf. Im Saugkanal entstehen ständig stochastisch verteilte Druckschwankungen, die ihre Ursache im eigentlichen Saugvorgang haben. So zum Beispiel beim Festsaugen oder bei Verstopfungen des Saugrüssels sowie beim Transport grobstückigen Sauggutes in der Saugleitung. Die auftretenden Druckveränderungen wirken zurück auf die Ventilatoren und versetzen diese in Schwingungen.

Drehschwingungen werden ebenfalls erzeugt durch den Antriebsstrang. Bei Saugbaggern kommen üblicherweise Brennkraftmaschinen zum Einsatz, die einerseits die Fortbewegung des Saugbaggers und andererseits den Antrieb der Ventilatoren übernehmen müssen. Die Brennkraftmaschinen liefern die übertragene Antriebsenergie zu den Ventilatoren nicht drehschwingungsfrei. Erfolgt die Energieübertragung zudem über eine Gelenkwelle. trägt auch diese zum Entstehen von Drehschwingungen bei. Es ist bekannt, dass Ventilatoren der Bauart Radialventilator empfindlich auf Drehschwingungen reagieren und deren Lebensdauer dadurch erheblich verkürzt wird.

Aus DE 191 405 A ist eine Ventilatorkaskade aus wenigstens zwei auf eigenen Wellen laufenden und mit jeweils einem eigenen Antrieb arbeitenden Radialventilatoren bekannt.

DE 20 2005 008 785 U1 schlägt die Verwendung einer solchen Ventilatorkaskade in einem Saugbagger der gattungsgemäßen Art vor. Darüber hinaus gehend ist vorgeschlagen, auch Sauggebläse mit mehr als zwei Stufen, mit gruppenweiser Steuerung einschließlich gruppenweiser Abschaltung und gruppenweisem Antrieb vorzusehen.

Es wird vorgeschlagen, zwei Ventilatoren parallel nebeneinander und zugleich zueinander versetzt anzuordnen. So ist von der Ausblasöffnung der ersten Ventilatorstufe zur Ansaugöffnung der zweiten Ventilatorstufe lediglich eine Umlenkung des Luftstroms um 90° erforderlich. Die nach diesem Vorschlag entstehende diagonale Anordnung der zwei Gebläsestufen erfordert einen erheblichen Bedarf an Bauraum innerhalb eines Saugbaggers. Da das das Sauggebläse aufnehmende so genannte Maschinenhaus gewöhnlich hinter dem Fahrerhaus des Fahrzeuges angeordnet ist, verschiebt sich bei einer solchen Bauweise die Abscheide- bzw. Sammeleinheit für das Baggergut weit nach hinten. Nachteilige Folgen dieser Bauweise sind verlängerte Fahrgestelle und eine Verlagerung des Fahrzeugschwerpunktes nach hinten mit der Folge einer notwendigen Verlängerung des Achsabstandes der Fahrzeugachsen und letztlich die Ausführung der Saugbagger auf Fahrgestellen mit vier Achsen, da anderenfalls die notwendige Bodenfreiheit nicht mehr zu gewährleisten ist. Damit einher geht eine wesentliche Steigerung der Kosten für einen solcher Art ausgeführten Saugbagger.

Ferner ist für jeden der beiden Ventilatoren eine eigene Antriebslösung notwendig. Dies ergibt sich beispielsweise durch die Forderung, dass die Drehzahlen der beiden Ventilatoren unabhängig voneinander regelbar sein sollen.

Für einen mechanisch auszuführenden Antrieb bedeutet dies, dass im Trägerfahrzeug ein zusätzliches Verteilergetri b angeordnet werden muss, durch das der von der Antriebsmaschine kommende Antriebsstrang auf zwei abgehende Antriebsstränge aufgeteilt und über nicht näher beschriebene Übertragungsmittel an die Antriebsräder der Ventilatorstufen weitergeleitet wird.

Eine Lösung dieser Aufgabe sieht vor, das Antriebsorgan mit einer Hydraulikpumpe auszustatten und an jedem der beiden Ventilatoren je einen Hydraulikmotor anzuordnen. Um dem Erfordernis einer unabhängigen Regelung der Antriebsdrehzahlen gerecht zu werden, können die hydraulischen Antriebe jedoch nicht mit einfachen hydraulischen Kreisläufen realisiert werden. Es muss zwischen dem Antriebsorgan und den Antriebswellen der Ventilatoren entweder je ein separater hydraulischer Kreislauf installiert werden oder es muss eine Servosteuerung zur Aufteilung der jeweiligen Fluidströme installiert werden.

Solche Hydraulikanlagen mit Antriebsleistungen in einer Größenordnung bis zu 1.000 kW führen bei hydrostatischen Systemen zu einer erheblichen Wärmeentwicklung. Die Beherrschung der entstehenden thermischen Probleme macht es zwingend erforderlich, eine Kühlung des Fluids vorzusehen.

Über eine solche Kühlung kann eine Senkung der Temperatur des Fluids erreicht werden. Eine Senkung der Objekttemperaturen an den Hydraulikpumpen bzw. -motoren ist nur mittelbar zu erreichen.

Eine allgemeine Aufgabe bei der Auslegung von Saugbaggern ist es jedoch, deren Einsatzfähigkeit in allen Klimazonen der Erde sicher zu stellen. Geschieht dies nicht, bestehen Einsatz- bzw. Vertriebsbeschränkungen mit den bekannten nachteiligen Effekten für die Hersteller der Saugbagger. Es ist deshalb notwendig, das Sauggebläse und alle zwischen Antriebsmaschine und Sauggebläse notwendigerweise anzuordnenden Baueinheiten so auszulegen, dass diese entweder nur wenig Wärme entwickeln oder wenn die Wärmeentwicklung unvermeidlich ist, eine effektive Kühlung vorzusehen.

Dabei muss berücksichtigt werden, dass aufgrund der allgemein bestehenden Erfordernisse das so genannte Maschinenhaus in seinen äußeren Abmessungen klein, die Sauggebläse nach Möglichkeit groß zu bemessen sind. Außerdem muss das Maschinenhaus zum Zweck der Vermeidung von Lärmbelästigungen mit einer hoch wirksamen Dämmung ausgestattet werden. Diese Erfordernisse sind nur durch eine hermetische Kapselung des Maschinenhauses zu erfüllen.

Um trotzdem eine ausreichende Kühlung der im Maschinenhaus angeordneten Komponenten zu erreichen, ist es notwendig, Einrichtungen zur Kühlung zusätzlich anzuordnen.

Deshalb ist in DE 299 02 562 U1 bereits ein Saugstutzen für eine Verbindung des Maschinenhauses mit der Ausströmeinrichtung für das Arbeitsmedium eines solchen Saugbaggers vorgeschlagen. Der vom Sauggebläse ausgestoßene Luftstrom soll dabei aufgrund seiner Strömungsgeschwindigkeit Luft aus dem Maschinenhaus ansaugen und abfördern. Eine Zwangsentlüftung entsteht dadurch nicht. Die zur Fluidkühlung im Maschinenhaus installierten Wärmetauscher geben ständig Verlustwärme ab, wodurch das Temperaturniveau hoch bleibt. Das schränkt die Einsatzfähigkeit solcher Art Saugbagger in warmen Klimazonen ein oder macht sie unmöglich.

Um die bei Saugbaggern auftretenden sehr komplexen Betriebsanforderungen zu erfüllen, sind des Weiteren bereits verschiedene Vorschläge für die Steuerung der Sauggebläse gemacht worden. Beispielsweise ist in DE 20 2005 008 785 U1 vorgeschlagen, an den Ausgang, das heißt, an die Ausblasöffnung des ersten Ventilators oder einer ersten gemeinsam angetriebenen Ventilatorgruppe eine direkte Verbindung zum Auslass unter Umgehung weiterer im Saugbagger angeordneter Ventilatoren oder Ventilatorengruppen vorzusehen. Damit soll erreicht werden, dass bei einfachen äußeren Anforderungen, wie beispielsweise bei leicht transportierbarem Sauggut, der Saugbagger mit verminderter Leistung gefahren werden kann und somit zumindest Kraftstoffeinsparungen erreicht werden. Daraus ergibt sich allerdings auch, dass Mittel vorgesehen sein müssen, die Antriebsstränge nicht genutzter Ventilatoren oder Ventilatorengruppen abzuschalten. Anderenfalls würden diese leer mitlaufen, woraus sich wenigstens eine deutliche Erhöhung der Temperaturen Im Maschinenhaus ergibt.

Ein weiterer Vorschlag aus DE 199 62 952 A1 sieht vor, nach der Abscheide- bzw. Filtereinrichtung und vor dem Sauggebläse, das hier einstufig ist, eine Drosseleinrichtung anzuordnen, die entweder den Saugkanal vollständig oder kontinuierlich einstellbar in beliebigen Zwischenstellungen verschließen kann. Die Verschlussvorrichtung soll dabei einerseits einer Steuerung des Luftstroms und damit der Mengenaufnahme des Sauggutes dienen. Andererseits wird ausgeführt, dass bei vollständigem Verschluss derselben beim Anfahrvorgang des Sauggebläses ein leichteres Hochlaufen desselben möglich sei und deshalb auf eine Anordnung einer zusätzlichen Anfahrkupplung verzichtet werden könne. Auf eine Kupplung im Antriebsstrang zwischen Antriebsmaschine und Sauggebläse kann nicht verzichtet werden, da das Sauggebläse anderenfalls auch beim Fahrbetrieb ständig mitlaufen würde. Andererseits ist bekannt, dass sich die Drehzahl eines Gebläses lastabhängig ändern kann, wenn die Antriebsmaschine dies zulässt. Da in Saugbaggern Brennkraftmaschinen eingesetzt werden, ist der Betriebszustand des Gesamtsystems lediglich vom freien Energieüberschuss abhängig, was bei einer Drosselung des Saugstromes zu einer Drehzahlerhöhung der Antriebsmaschine und des Sauggebläses führen würde. Folgeerscheinung ist ein noch weiteres Herabregeln des sich erhöhenden Saugstromes. Da die zur Verfügung stehende Antriebsleistung im Sauggebläse jedoch notwendigerweise umgesetzt wird, ist der verbleibende Luftstrom energiereicher, das heißt, er ist deutlich erwärmt. In der Folge erwärmt sich auch das Sauggebläse.

Die übermäßigen Erwärmungen des Luftstromes und des Sauggebläses machen wiederum die Einsetzbarkeit solcher Art Saugbagger in wärmeren Klimazonen unmöglich.

Nach einem Vorschlag in DE 202 05 421 U1 soll zwischen einer Absetz- oder Filtereinheit und einem Sauggebläse eine Verschlussklappe angeordnet sein, die über einen am Absetzbehälter angeordneten Kontaktschalter angesteuert wird. Die Ansteuerung soll dabei gewährleisten, dass ein weitgehend gefüllter Absetzbehälter gewichtsmäßig gesteuert, sich absenkt und den Kontaktschalter auslöst, sodass die Absp rrklappe geschlossen wird. Die Saugleitung ist damit gegenüber dem Sauggebläse verschlossen, sodass unter Normaldruck eine Entleerung des Absetzbehälters möglich ist. Andererseits läuft während des Entleerungszyklus des Absetzbehälters das Sauggebläse leer, wodurch die Antriebsenergie wiederum in Wärme umgesetzt und das Temperaturniveau im Maschinenhaus deutlich erhöht wird. Auch in diesem Fall resultieren Einsatzbeschränkungen für Klimazonen mit höheren Temperaturen.

Soweit in den im Stand der Technik referierten Dokumenten Vorschläge enthalten sind, die eine Einflussnahme auf den Luftstrom des Sauggebläses vorsehen, dienen diese Vorschläge der Anpassung der Betriebsparameter an bestimmte äußere Einsatzbedingungen. Beispielsweise betrifft dies bei den Vorschlägen aus DE 20 2005 008 785 U1 und DE 199 62 952 A1 die Förderung leicht förderbaren Sauggutes. Ein zweiter Gesichtspunkt dabei ist Energieeinsparung.

Zumindest bei dem Vorschlag gemäß DE 199 62 952 A1 geht die Einflussnahme auf den Luftstrom mit einer Erwärmung desselben und des Sauggebläses im Maschinenhaus einher.

Die Einrichtung nach DE 202 05 421 U1 wiederum sieht nur eine Beeinflussung des Luftstroms zum Zweck der Entleerung des Absetzbehälters vor, berücksichtigt dabei aber nicht die durch Störungen im Entleerungszyklus und deutlich verlängerte Entleerungszyklen entstehenden thermischen Risiken für das Sauggebläse.

Es existieren im Stand der Technik mithin keine Vorschläge, die ein energiesparendes und damit auch die Belastung von Antriebsmaschinen, Antriebssträngen und Ventilatoren schonendes Betreiben des Sauggebläses möglich machen. Vorschläge zur Einflussnahme auf ein Sauggebläse während des Betriebes zur Aufrechterhaltung der Sollbetriebsparameter sowie zur Absenkung des Temperaturniveaus im Umfeld eines Sauggebläses sind nicht gegeben.

Es ist deshalb Aufgabe der Erfindung, die im Stand der Technik bekannten Ventilatorkaskaden so zu verbessern, dass eine Ventilatorkaskade für den Einsatz in Saugbaggern g schaffen wird, die bei hoher Gebläseleistung zugleich wenig Bauraum in Anspruch nimmt, deren Antriebsstrang weitgehend frei ist von Drehschwingungen, bei der Druckschwankungen im Saugkanal durch eine Anordnung von Klappen ausgeglichen werden können, die nur minimal Wärme entwickelt, energiesparend angefahren werden kann, bei Betriebsstörungen dergestalt gesteuert werden kann, dass sie Lastkollektive und vor allem Drehschwingungen weitgehend vermeidet, die die Rückübertragung von Drehschwingungen auf den Antriebsstrang und die Antriebsmaschine gering hält und die aus einer Kombination von Mitteln besteht, die zur Erreichung der oben beschriebenen Ziele geeignet ist.

Nach der Erfindung wird die Aufgabe durch eine Ventilatorkaskade für Saugbagger mit den Merkmalen des kennzeichnenden Teils des Patentanspruches 1 in Verbindung mit den Merkmalen des Oberbegriffes dieses Patentanspruches gelöst. Neben- und nachgeordnete Patentansprüche betreffen weitere Ausbildungen der Erfindung und beschränken diese nicht.

In der nachstehenden Beschreibung, den Ausführungsbeispielen und den Patentansprüchen werden die verwendeten Begriffe mit folgenden Bedeutungsinhalten verwendet, wobei die aufgeführten Definitionen zugleich Merkmale der Erfindung bestimmen:

Sauggebläse - ist eine Anordnung, die entweder einen einzelnen Radialventilator oder eine Ventilatorkaskade und Teile des Antriebes dafür umfasst.

Ventilatorkaskade - ist eine Anordnung, die wenigstens aus einem ersten und wenigstens einem zweiten Radialventilator besteht.

Welle - ist eine in einer Ventilatorkaskade angeordnete Baueinheit, die vom Antriebsorgan auf geeignete Weise mit Antriebsenergie versorgt wird und diese auf geeignete Weise auf die in der Ventilatorkaskade vorhandenen Ventilatoren überträgt, wenigstens aus einer Welle und Lagerungen für diese bestehend.

Antriebsbauteil - ist ein mit der Welle verbundenes Bauteil, das die Übertragung d r Antriebsenergie zu einem der V ntilatoren ermöglicht.

Zugmittel - ist eines der im Maschinenbau bekannten technischen Mittel zur Übertragung der in einem Zugmittelgetriebe auftretenden Zugkräfte, wie beispielsweise Flach-, Keil-, Rillen-, Zahnriemen, Ketten oder Schnüre, soweit sie mit den Antriebsbauteilen zusammenwirken können.

Anfahrklappe - ist ein Bauteil, das entweder im Ansaugkanal des ersten oder im Ausblaskanal nach dem zweiten Ventilator angeordnet ist. Bei einer Ventilatorkaskade kann sie auch zwischen zwei Ventilatoren angeordnet sein.

Bypassklappe - ist ein im Verbindungskanal zwischen der Saugseite eines ersten Ventilators und der Auslassseite des zweiten Ventilators angeordnetes Bauteil, das im Normalbetrieb diesen Verbindungskanal verschließt.

Verbindungskanal - ist ein zwischen der Saugseite und der Auslassseite eines Sauggebläses verlaufender Kanal, der eine Rückführung des Saugstromes ermöglicht.

Energiequelle - ist ein Antriebsorgan, das in der Lage ist, die zum Betrieb des Saugbaggers, insbesondere des Sauggebläses eines Saugbaggers, notwendige Antriebsenergie aufzubringen.

Nach der Erfindung wird ein Sauggebläse im Maschinenhaus eines Saugbaggers angeordnet, das als Ventilatorkaskade ausgelegt ist und wenigstens aus einem ersten und einem zweiten Radialventilator besteht.

Erster und zweiter Radialventilator sind parallel und versetzt zueinander angeordnet. Das heißt, jeder der beiden Radialventilatoren hat eine eigene Antriebswelle und wird über auf dieser angeordneten Antriebsorganen mit der notwendigen Antriebsenergie beaufschlagt.

Im Zwischenraum zwischen beiden Radialventilatoren Ist in etwa mittig eine Welle angeordnet, die gleichfalls Antriebsbauteile trägt. Diese Welle ist separat gelagert und hat eine Verbindung zu den Wellen der beiden Radialventilatoren.

Diese Verbindung erfolgt über Zugmittel, wie Riemen oder Ketten.

Die oben beschriebene Anordnung kann als Baueinheit auf einem gemeinsamen Rahmen angeordnet sein oder auf andere geeignete Weise in das Maschinenhaus des Saugbaggers als Einzelkomponenten integriert sein. Ebenso kann die oben beschriebene Anordnung in Längs- oder Querrichtung oder aber in jeder anderen Ausrichtung im Maschinenhaus angeordnet sein.

Auf geeignete Weise wird die Ventilatorkaskade mit der notwendigen Antriebsenergie versorgt. Dies kann beispielsweise ein Antriebsstrang sein, der mit der oben beschriebenen Welle direkt oder über ein Zugmittelgetriebe verbunden ist.

Ebenso kann dies ein elektromotorischer Antrieb sein.

Es ist ebenso möglich, einen hydraulischen Antriebsmotor mit der Welle zu verbinden.

Die oben beschriebene Ventilatorkaskade hat zunächst den Vorteil, dass sie die für einen zuverlässigen Betrieb des Saugbaggers erforderliche Saugleistung bereitstellen kann. Das heißt, sie kann den erforderlichen Volumenstrom ebenso erzeugen, wie den erforderlichen Unterdruck auch bei einer größeren Länge der Saugleitung, bei einer Lösung für einen vorgeschalteten Abscheider, die einen größeren Strömungswiderstand verursacht, bei durch das Baggergut bedingten erhöhten Saugwiderständen (temporäre Verstopfung) und bei stark verschmutzten Filtereinheiten, soweit solche dem eigentlichen Abscheider nachgeschaltet sind.

Die erfindungsgemäße Ventilatorkaskade hat deshalb den weiteren Vorteil, dass sie einen längeren Betrieb zwischen notwendigen Wartungsintervallen des Abscheiders bzw. der Feinfiltereinheit ermöglicht.

Da Saugbagger gewöhnlich nicht kontinuierlich betrieben werden, sondern zumeist an wechselnden Einsatzorten für bestimmte Zeitintervalle zum Einsatz kommen, kann so ein Einsatzintervall ohne zwischenzeitliche Wartungsleistungen absolviert werden.

Die zwischen den Radialventilatoren angeordnet W lle muss zunächst die gesamte Antriebsleistung für beide Radialventilatoren bereitstellen, was zu einer erhöhten Lagerbelastung bei dieser Welle führt.

Erfindungsgemäß ist diese Welle deshalb in einer Ausführungsform der Ventilatorkaskade in annähernd gleicher Höhe wie die Antriebswelle angeordnet. Die auf die Zugmittel zu übertragenden Zugkräfte bzw. die resultierenden Drehmomente heben sich dabei teilweise auf und vermindern so die Lagerbelastung.

Erfolgt die Zuführung der Antriebsenergie gleichfalls über ein Zugmittelgetriebe, kann die Welle gegenüber der Lage der Wellen der Radialventilatoren nach unten versetzt sein, sodass auch in diesem Fall eine teilweise Kompensation der Kräfte bzw. Drehmomente möglich ist.

Die eng beieinander angeordneten Radialventilatoren ermöglichen es, den durch die Zugmittelgetriebe benötigen Raum zwischen ihnen zu kapseln und auf diese Weise eine Geräuschdämmung für die Zugmittelgetriebe und weitere beigeordnete Komponenten des Antriebsstranges zu erreichen. Die Kapselung kann mit einer zusätzlichen Dämmschicht versehen sein.

Ein weiterer Vorteil einer solchen antriebsseitig gekapselten Ventilatorkaskade besteht darin, dass der entstandene Hohlraum über eine Öffnung, einen Kanal oder einen Saugrüssel einerseits und über eine Ansaugöffnung andererseits entlüftet werden kann. Dabei kann über die Ansaugöffnung Außenluft zugeführt werden, während die Verbindung zum Kanal des Arbeitsmediums die Luft im gekapselten Raum absaugt und auf diese Weise Überhitzungen der Zugmittel und der vorhandenen Lagerungen vermieden werden können.

Im Ansaug- oder im Auslasskanal nach dem zweiten Ventilator ist bei einer weiteren Ausführungsform der Ventilatorkaskade eine Anfahrklappe angeordnet, die beim Anfahren geschlossen wird. In diesem Zustand fördert die Ventilatorkaskade keine Luft und läuft weitgehend leer, wodurch sich der Anlassvorgang erheblich verkürzt und en rgiegünstig r gestaltet.

Die auch als Blende od r Schieber ausführbare Anfahrklappe ist betätigbar und v rschli ßt den Ansaug- oder Ausblaskanal. Das Sauggebläse kann somit keinen Volumenstrom fördern. Dadurch wird verhindert, dass b reits b im Anfahren des Sauggebläses ein hoher Volumenstrom gefördert wird, das Sauggebläse einen hohen Energiebedarf hat, den Antriebsstrang zu stark belastet und der Anfahrvorgang sich deutlich verlängert.

Es ist ebenso möglich, die Anfahrklappe in die Saugseite des ersten oder auch in Verbindungskanäle zwischen zwei Ventilatoren einzubauen. Wesentlich ist dabei lediglich der weitgehende Verschluss des jeweiligen Kanals und damit die Unterbrechung des sich sonst aufbauenden Luftstroms.

Von der Auslassseite des zweiten Ventilators zur Ansaugseite des ersten Ventilators ist bei einer weiteren Ausführungsform der Ventilatorkaskade ein Verbindungskanal geführt, der bei bestimmungsgemäßem Betrieb der Ventilatorkaskade durch eine Bypassklappe verschlossen ist. Ist im Ansaugstrang jedoch eine Verstopfung vorhanden, variieren Unterdruck und Strömungsgeschwindigkeit erheblich, kann die Bypassklappe selbsttätig oder gesteuert öffnen und die Betriebsparameter der Ventilatorkaskade sowie den gesamten Antriebsstrang bis hin zur Energiequelle stabilisieren. Gleichzeitig kann dabei ein Aufschaukeln des Saugstromes und daraus folgende unkontrollierbare Schwingungen des gesamten Saugbaggers vermieden werden.

Ein weiterer Vorteil der erfindungsgemäßen Ventilatorkaskade besteht deshalb darin, dass ein Anlaufverhalten sichergestellt werden kann, dass die Ventilatorkaskade selbst, den zu dieser führenden Antriebsstrang, die Energiequelle und ein möglicherweise zwischengeschaltetes Getriebe bzw. eine möglicherweise zwischengeschaltete Kupplung wesentlich geringer belastet. Die Radialventilatoren können deshalb leistungsstärker ausgelegt und in ihren Parametern an vorhandene Belastungsgrenzen stärker angenähert werden, als bei den aus dem Stand der Technik bekannten Lösungen.

Insoweit besteht ein besonderer Vorteil der erfindungsgemäßen Ventilatorkaskade darin, dass diese dem Kennlinienverlauf der in Fahrzeugen üblicherweise vorhandenen Verbrennungsmotoren entgegen kommt. Durch das weiche Anlaufverhalten wird die Drehzahl des Verbrennungsmotors nicht so stark abfallen, wie im Falle einer vergleichsweise starren V rbindung des Antriebsstranges gepaart mit einem hohen Anlaufdrehmoment der Radialventilatoren.

Es ist deshalb auch ein wesentlicher Vorteil der erfindungsgemäßen Ventilatorkaskade, dass Überbeanspruchungen im Antriebsstrang derselben stark abgeschwächt werden und daraus entstehende Lastwechselreaktionen ebenfalls geringer ausfallen. Dies hat weiterhin die Wirkung, dass die Energiequelle, das heißt der Verbrennungsmotor, nahe seinem optimalen Betriebspunkt betrieben werden kann und eine Überdimensionierung desselben nicht notwendig ist.

Anfahr- und Bypassklappe haben zudem zusätzlich den Effekt, dass sie auch während des Betriebes des Saugbaggers zum Aussteuern von Lastwechselreaktionen eingesetzt werden können. Kommt es beispielsweise zum Verschluss der Saugleitung, können eine oder beide Klappen geöffnet werden und Lastwechselreaktionen und die sonst unvermeidliche Drehzahlsteigerung der Radialventilatoren wird zumindest abgemildert.

Ein weiterer Vorteil dieser Klappen besteht auch darin, dass bei einem temporären Verschluss des Saugrüssels oder der Saugleitung der Saugdruck durch Öffnen der Klappen reduziert werden kann, sodass beispielsweise angesaugtes und den Saugrüssel verstopfendes grobstückiges Gut von selbst wieder abfallen oder leichter entfernt werden kann. Gleiches gilt für Fehlbedienung von Saugrüssel oder -lanze oder bei Unfällen.

Die Erfindung wird nachstehend anhand einiger Ausführungsbeispiele und Zeichnungen näher erläutert. Dabei zeigen:
Fig. 1 - eine stark schematisierte Prinzipdarstellung der erfindungsgemäßen Ventilatorkaskade mit den für deren Betrieb zwingend erforderlichen Elementen.
Fig. 2 - eine Ausführungsform der erfindungsgemäßen Ventilatorkaskade in einer Anordnung, bei der im Zwischenraum zwischen den Ventilatoren deren Antrieb in der Form von Zugmittelgetrieben und einer Kupplung angeordnet ist.

Ein erster Radialventilator **1** ist mit seinem Sockel **2** auf einer Grundfläche **3** angeordnet. Dessen Ausblasöffnung **5** ist zu der nicht dargestellten Ansaugöffnung eines zweiten Ventilators **7** geführt. Von der Ausblasöffnung **5** des ersten Ventilators **1** ist ein Verbindungskanal **6** zur nicht dargestellten Ansaugöffnung des zweiten Ventilators **7** geführt. Dessen Ausblasöffnung **5** führt den Luftstrom über einen Auslasskanal **8** von der Ventilatorkaskade fort. Dabei führt der Auslasskanal **8** den geförderten Luftstrom entweder ins Freie, in eine Einrichtung zur Geräuschdämpfung oder in eine Filtereinheit.

Vom Auslasskanal **8** ist ein Verbindungskanal **9** zum Ansaugkanal **4** des ersten Ventilators **1** geführt.

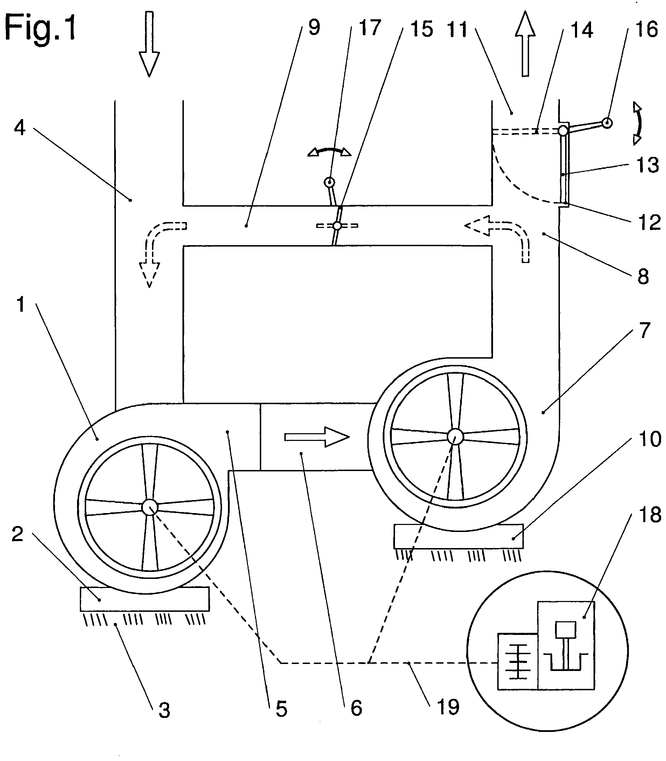

Der zweite Ventilator **7** ist mit seinem Sockel **10** auf stabilem Grund befestigt, wobei Sockel **2** des ersten Ventilators **1** und Sockel **10** des zweiten Ventilators **7** auch gemeinsam auf einem Hilfs- oder Zwischenrahmen, der in Fig. **1** nicht dargestellt ist, befestigt sein können.

Auslasskanal **8** hat in seinem fortführenden Abschnitt **11** eine seitliche Ausbuchtung **12**, in der eine so genannte Anfahrklappe **13** liegt. Die Anfahrklappe **13** ist bei Normalbetrieb der Ventilatorkaskade geöffnet, während sie beim Anfahren der Ventilatorkaskade den Auslasskanal **8** verschließt, indem sie in ihre Arbeitsstellung **14** bewegt wird.

Im Verbindungskanal **9** ist weiterhin eine so genannte Bypassklappe **15** angeordnet, die bei Normalbetrieb geschlossen ist. Über ein Betätigungsorgan **17** kann die Bypassklappe **15** vollständig geöffnet werden oder bei Erfordernis auch Zwischenstellungen einnehmen.

**Anfahr-13** und Bypassklappe **15** könn n auch als Schieber oder BI nde ausgeführt sein.

Beim Anfahren der Ventilatorkaskad wird zunächst die Anfahrklappe **13** mit Hilfe des Betätigungsorgans **16** in ihre Arbeitsstellung **14** bewegt. Somit ist beim Anfahren der Ventilatorkaskade der Auslasskanal **8** verschlossen und die Ventilatoren **1** und **7** können keinen Luftstrom fördern. Dadurch sinkt deren Leistungsbedarf erheblich und Antriebsquelle **18** wird deutlich entlastet.

Sobald die Ventilatoren **1** und **7** ihre Solldrehzahl erreicht haben, wird die Anfahrklappe **13** über ihr Betätigungsorgan **16** in die Ausgangsstellung zurück bewegt und gibt den Auslasskanal **8** frei. Die Ventilatorkaskade kann angesaugte Luft verdichten und über den Auslasskanal **8** weiter befördern.

Es ist möglich, den Anfahrvorgang unter Verwendung der Bypassklappe **15** auch mehrstufig zu gestalten. Hierbei wird ausgehend vom Verschluss des Auslasskanals **8** durch die Anfahrklappe **13** bei Erreichen einer Solldrehzahl zunächst die Bypassklappe **15** ganz oder teilweise geöffnet, sodass ein Umluftstrom über den Verbindungskanal **9** strömen kann und die Ventilatoren **1** und **7** bereits eine etwas erhöhte Belastung erfahren.

Im Normalbetrieb der Ventilatorkaskade sind die Anfahrklappe **13** vollständig geöffnet und die Bypassklappe **15** vollständig geschlossen. In diesem Betriebszustand können Störungen der Gestalt auftreten, dass ein am Saugbagger angeschlossener Saugrüssel sich festsaugt, grobstückiges Gut angesaugt wird und den Saugrüssel oder den Saugkanal verstopft oder anderweitige Einflüsse zur Druckschwankungen im Saugkanal führen. Daraus resultieren Schwankungen des Leistungsbedarfs der Ventilatorkaskade, die sich in Drehzahlschwankungen äußert. Über den Antriebsstrang **19** des Saugbaggers, der in Fig. 1 nur schematisiert dargestellt ist, werden solche Lastschwankungen bis zur Antriebsquelle **18** geleitet, die gewöhnlich ein Verbrennungsmotor ist.

Die daraus entstehenden Belastungen aller beteiligten Baueinheiten werden abgemildert, indem bei solchen Lastschwankungen die Bypassklappe **15** geöffnet wird und sich im Verbindungskanal **9** eine Strömung aufbauen kann. Der V rbindungskanal **9** wirkt damit als Kurzschlussleitung zwischen der Ausblasseite des Ventilators **7** und dem Ansaugkanal **4** des Ventilators **1**. Damit kann ein im Ansaugkanal **4** plötzlich entstandener übermäßiger Unterdruck ausgeglichen werden durch Öffnen der Bypassklappe **15** und Rückführung eines Teils des Luftstromes von der Ausblasseite des Ventilators **7**.

Um solche plötzlich auftretenden Lastschwankungen ausregeln zu können, kann die Bypassklappe **15** über ihr Betätigungsorgan **17** manuell, mit Stellorganen oder selbsttätig gesteuert sein. Im Fall der selbsttätigen Steuerung wird die Bypassklappe **15** so gelagert, dass sie aufgrund ihres Eigengewichtes bei Normalbetrieb in der geschlossenen Stellung verbleibt und durch ein Gegengewicht in dieser Stellung ausbalanciert ist Steigt im Ansaugkanal **4** des ersten Ventilators **1** der Unterdruck an, öffnet die Bypassklappe **15** selbsttätig und gleicht durch Rückführung bereits geförderter Luft den Druckabfall wenigstens teilweise aus.

Anfahrklappe **13** und Bypassklappe **15** können auch über Stellorgane angesteuert werden, die aufgrund externer Steuerbefehle reagieren. In einem solchen Fall kann eine Steuereinheit für die Ventilatorkaskade oder eine erweiterte Steuereinheit für die gesamte Saugbaggeranordnung notwendige Messwerte erfassen, verarbeiten und daraus Steuerbefehle für die Ventilatorkaskade, das heißt insbesondere für die Anfahrklappe **13** und die Bypassklappe **15** generieren, die dann durch die Betätigungsorgane **16** und **17** ausgeführt werden.

In einer realisierten Ausführungsform besteht die Ventilatorkaskade aus einem ersten Radialventilator **20** und einem zweiten Radialventilator **21**, die beide über eine gemeinsame Antriebslösung mit Energie versorgt werden.

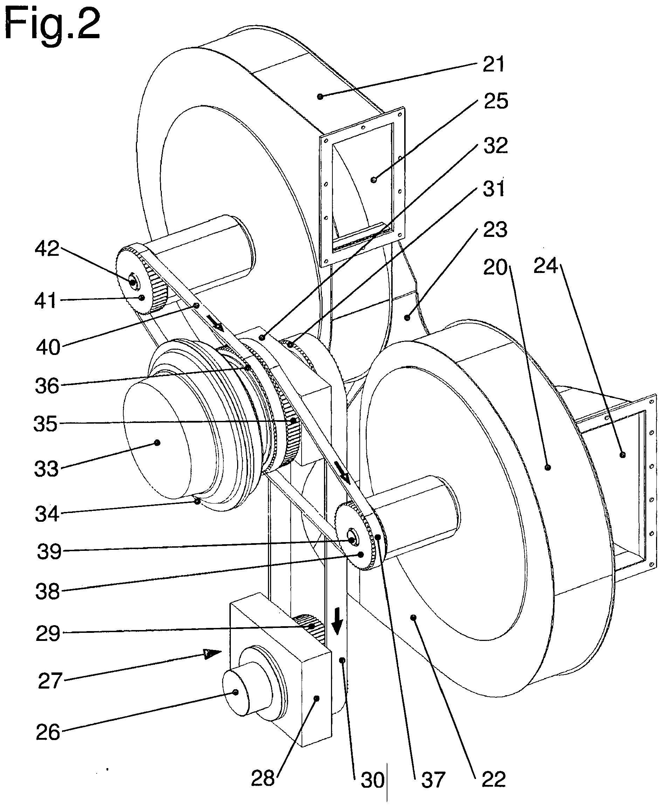

Erster **20** und zweiter Radialventilator **21** sind nebeneinander und in der Höhe und seitlich versetzt zueinander angeordnet. Der erste Radialventilator **20** ist mit seinem Ausgang **22** über einen Verbindungskanal **23** mit der in Fig. 2 nicht dargestellten Ansaugöffnung des zweiten Radialventilators **21** verbunden. Der erste Radialventilator **20** saugt über seinen Ansaugkanal **24** die Prozessluft an, die er zugleich aus dem vorgeschalteten Ansaugsystem (Saugrüssel, Saugleitung, Abscheideorgane) ansaugt.

Der zweite Radialventilator **21** ist mit sein r Austrittsöffnung **25** an ein n Abluftkanal angeschlossen. Zusätzlich kann im Abluftkanal ein Mittel zur Geräuschdämmung vorgesehen sein.

Der Antrieb der Ventilatorkaskade erfolgt über einen in Fig. 2 nicht dargestellten Antriebsstrang des Fahrzeuges. Der Antriebsstrang der Ventilatorkaskade besteht aus einem Wellenstumpf **26** mit Mitteln zum Anschluss an den fahrzeugeigenen Antriebsstrang in Form von Zapfen, Flansch oder umfangsseltigen Profilierungen. Vorzugsweise wird an die Anschlussseite **27** eine Gelenkwelle angeschlossen. Der Wellenstumpf **26** ist in einem Lagerbock **28** gelagert und geht durch diesen hindurch. Rückseitig ist sodann eine Riemenscheibe **29** montiert, die vorzugsweise für die Verwendung mit einem Zahnriemen ausgelegt Ist. Ein Zahnriemen **30** führt von dem Wellenstumpf **26** die Antriebsenergie zu einer Riemenscheibe **31**, die auf einer nicht dargestellten Welle im Lagerbock **32** gelagert ist und durch diesen hindurch geht. Auf der gegenüberliegenden Seite des Lagerbocks **32** ist eine Strömungskupplung **33** angeordnet, die an ihrem Außengehäuse **34** wiederum Riemenscheiben **35** und **36** trägt. Von der Riemenscheibe **35** ist ein Zahnriemen **37** geführt, der über eine Riemenscheibe **38** auf der Welle **39** des ersten Radialventilators **20** angeordnet ist und diesen antreibt. Von Riemenscheibe **36** ist ein Riementrieb **40** zur Riemenscheibe **41** geführt, die wiederum auf der Welle **42** des zweiten Radialventilators **21** angeordnet ist.

Die Anordnung Ist so ausgelegt, dass entsprechend den zu übertragenden Leistungen eine Ausgewogenheit hinsichtlich aller eingesetzten Komponenten erreicht wird. So wirken die Zahnriemen **30, 37** und der Riementrieb **40** in ihrem Laufverhalten leicht elastisch und damit schwingungsdämpfend. Zwischen Riemenscheibe **29** und Riemenscheibe **31** ist ein Übersetzungsverhältnis von ungefähr 1 realisiert.

Die Übersetzungsverhältnisse zwischen den Riemenscheiben **35** und **38** sowie **36** und **41** sind so gewählt, dass eine Übersetzung ins Schnelle erfolgt. Die notwendige Drehzahlerhöhung ist somit in einem Bereich des Antriebsstrangs realisiert, in dem nicht mehr die Maximalleistung übertragen werden muss.

Die Strömungskupplung **33** hat eine nachgi bige Charakteristik, das heißt, sie hat beim Anlaufen aus dem Stand einen erheblichen Schlupf, während dieser bei steigender Drehzahl geringer wird. Treten beim Betrieb der Ventilatorkaskade Druckstöße auf, die zu Drehzahlveränderungen der Radialventilatoren **20** und **21** führen, werden diese vor allem durch die Strömungskupplung **33** abgefangen und nicht auf den äußeren Energieerzeuger übertragen. In gleicher Weise wirken die Zahnriemen **30, 37** und der Riementrieb **40**. Außerdem kann über zusätzlich anzuordnende Anfahr- und Bypassklappen eine Steuerung der Druckverhältnisse im Saugkanal erreicht werden, wodurch erhebliche Drehzahlschwankungen und damit einhergehende Belastungen der beteiligten Komponenten abgebaut werden können. Die Lagerböcke **28** und **32** sind so ausgeführt, dass sie die Lagerung der jeweiligen Wellen mittig mit nur einem Lagerungspunkt ermöglichen. Dadurch ist eine kleine Bauweise und die Einsparung wenigstens einer weiteren Lagerung bei jeder der beiden Wellen möglich.

Die Riementriebe mit dem Zahnriemen **37** liegen diametral gegenüber. Damit heben sich von ihnen ausgehende Radialbelastungen auf das Lager im Lagerbock **32** weitgehend auf. Radialkräfte vom Riementrieb mit dem Zahnriemen **30** werden durch das statische Gegengewicht der Strömungskupplung **33** ebenfalls ausgeglichen. Auf diese Weise werden extreme Kräfte im Antriebsstrang der Ventilatorkaskade weitgehend vermieden.

Die oben beschriebene Antriebslösung ist in einer weiteren Ausführungsform mit einer Einhausung versehen. Diese ist in Fig. 2 nicht dargestellt, da ansonsten Details der Antriebslösung unsichtbar wären.

Eine weitere Ausführungsform sieht vor, diese Einhausung mit einer Zuluftöffnung oder einem Zuluftanschluss und einer Verbindung zum Saugkanal auszustatten. Damit wird erreicht, dass der Antriebsstrang ständig mit einem Luftstrom beaufschlagt ist und die durch die hohen zu übertragenden Antriebsleistungen entstehende Wärme zuverlässig abgeführt wird.

Die dabei erreicht Absenkung des Temperaturniveaus im Antriebsstrang ermöglicht es wiederum, die erfindungsg mäß V ntilatorkaskade bei erhöhten Umgebungstemperaturen zu betreiben.

### Bezugszeich nliste

- 1: Radialventilator
- 2: Sockel
- 3: Grundfläche
- 4: Ansaugkanal
- 5: Ausblasöffnung
- 6: Verbindungskanal
- 7: Radialventilator
- 8: Auslasskanal
- 9: Verbindungskanal
- 10: Sockel
- 11: Fortführender Abschnitt des Kanals [8]
- 12: Ausbuchtung
- 13: Anfahrklappe
- 14: Arbeitsstellung
- 15: Bypassklappe
- 16: Betätigungsorgan
- 17: Betätigungsorgan
- 18: Antriebsquelle
- 19: Antriebsstrang
- 20: Radialventilator
- 21: Radialventilator
- 22: Ausgang des Radialventilators [20]
- 23: Verbindungskanal
- 24: Ansaugkanal
- 25: Austrittsöffnung des Radialventilators [21]
- 26: Wellenstumpf
- 27: Anschlussseite
- 28: Lagerbock
- 29: Riemenscheibe
- 30: Zahnriemen
- 31: Riemenscheibe
- 32: Lagerbock
- 33: Strömungskupplung
- 34: Außengehäuse
- 35: Riemenscheibe
- 36: Riemenscheibe
- 37: Zahnriemen
- 38: Riemenscheibe
- 39: Welle
- 40: Riementrieb
- 41: Riemenscheibe
- 42: Welle

## Patentansprüche

1. Ventilatorkaskade für einen Saugbagger, mit
einem ersten (1; 20),
einem zweiten Radialventilator (7; 21)
und einem Verbindungskanal (6) zwischen der Ausblasöffnung (5) des ersten (1; 20) und der Ansaugöffnung des zweiten Radialventilators (7; 21),
bei der
erster (1; 20) und zweiter Radialventilator (7; 21) nebeneinander und so angeordnet sind, dass ihre Antriebswellen:
- auf der gleichen Seite angeordnet sind
- und die gleiche Drehrichtung haben,
und einem Antriebsstrang (19), der wie folgt aufgebaut ist:
- im Raum zwischen erstem (1; 20) und zweitem Radialventilator (7; 21) ist eine Welle angeordnet, die in einem Lagerbock (32) gelagert ist und an einer Seite eine Riemenscheibe (31) trägt, von der ein Zahnriemen (30) zu einer Riemenscheibe (29), die mit einem Wellenstumpf (26) verbunden ist, geführt und ein Zugmittelgetriebe ausgebildet ist, das dem Antrieb der Ventilatorkaskade dient,
- die im Lagerbock (32) gelagerte Welle eine weitere Riemenscheibe (35) trägt, die mit einer Riemenscheibe (38) auf der Welle (39) des ersten Radialventilators (1; 20) und einem Zahnriemen (37) ein erstes Zugmittelgetriebe bildet,
- die im Lagerbock (32) gelagerte Welle eine weitere Riemenscheibe (36) trägt, die mit einer Riemenscheibe (41) auf der Welle (42) des zweiten Radialventilators (7; 21) und einem Zahnriemen (40) ein zweites Zugmittelgetriebe bildet,
- und der Lagerbock (32) in etwa in der Höhe der Wellen (39; 42) des ersten (1; 20) und des zweiten Radialventilators (7; 21) od r unterhalb angeordnet sind,
**dadurch gekennz ichnet, dass**
zwischen dem Auslasskanal (8; 25) des zweiten (7; 21) und dem Ansaugkanal (4; 24) des ersten Ventilators ein Verbindungskanal (9) angeordnet ist, der beim Betrieb der Ventilatorkaskade durch eine Bypassklappe (15) verschlossen ist,
im Ansaugkanal (4; 24) des ersten Radialventilators (1; 20) oder im Auslasskanal des zweiten Ventilators (7; 21) eine Anfahrklappe (13) oder ein Schieber angeordnet sind, die betätigbar sind und den Zutritt von Außenluft ermöglichen oder den Saugkanal verschließen,
wobei die im Ansaugkanal (4) des ersten Ventilators (1; 20) oder im Auslasskanal (8) des zweiten Ventilators (7; 21) angeordnete Anfahrklappe (13)
oder die im Verbindungskanal (9) angeordnete Bypassklappe (15) einzeln oder gemeinsam betätigbar sind,
und deren Betätigung manuell und/oder mit durch Hilfsenergie beaufschlagten Stellorganen und/oder mit durch Hilfsenergie betätigten Stellorganen in Abhängigkeit von Befehlen einer Steuereinheit ausführbar ist.

2. Ventilatorkaskade für einen Saugbagger nach Patentanspruch 1,
**dadurch gekennzeichnet, dass**
im Antriebsstrang (19) auf der im Raum zwischen erstem (1; 20) und zweitem Radialventilator (7; 21) angeordneten und im Lagerbock (32) gelagerten Welle eine Strömungskupplung (33) angeordnet ist, deren eine Kupplungshälfte mit der Riemenscheibe (31) des dem Antrieb der Ventilatorkaskade dienenden Zugmittelgetriebes und deren andere Kupplungshälfte mit der Riemenscheibe (35) des ersten und der Riemenscheibe (36) des zweiten Zugmittelgetriebes verbunden ist.

3. Ventilatorkaskade für einen Saugbagger nach einem der Patentansprüche 1 oder 2,
**dadurch gek nnz ichnet, dass**
der Raum zwisch n rst m (1; 20) und zweitem Radialventilator (7; 21), in dem die Welle und das erste und das zweite Zugmittelgetriebe sowie die Antriebswellen (39; 42) des ersten (1; 20) und des zweiten Radialventilators (7; 21) angeordnet sind,
durch ein Gehäuse abgeschlossen ist.

4. Ventilatorkaskade für einen Saugbagger nach Patentanspruch 3,
**dadurch gekennzeichnet, dass**
das Gehäuse eine Dämmung hat.

5. Ventilatorkaskade für einen Saugbagger nach einem der Patentansprüche 3 oder 4,
**dadurch gekennzeichnet, dass**
zwischen dem Gehäuse
und dem Ansaugkanal (4; 24) des ersten Radialventilators (1; 20)
oder dem Ansaugkanal des zweiten Radialventilators (7; 21)
eine Verbindung besteht, durch die eine Entlüftung des Innenraums des Gehäuses erfolgt,
wobei das Gehäuse über eine im Gehäusemantel angeordnete Öffnung belüftet ist.

6. Ventilatorkaskade für einen Saugbagger nach einem der Patentansprüche 1 bis 5,
**dadurch gekennzeichnet, dass**
für das erste Zugmittelgetriebe
und/oder für das zweite Zugmittelgetriebe
und/oder für das Zugmittelgetriebe zwischen der Riemenscheibe (29) auf Wellenstumpf (26) und der Riemenscheibe (31) Flachriemen, Keilriemen, Rillenriemen, Zahnriemen, Ketten oder Schnüre Verwendung finden.

## Claims

1. A fan cascade for a suction excavator, with
a first (1; 20),
a second radial fan (7; 21)
and a connecting passage (6) between the blow-out opening (5) of the first (1; 20) and the suction opening of the second radial fan (7; 21), in which
first (1; 20) and second radial fan (7; 21) are arranged next to one another and so that their drive shafts:
- are arranged on the same side
- and have the same direction of rotation,
and a drive train (19), which is constructed as follows:
- in the space between first (1; 20) and second radial fan (7; 21) a shaft is arranged, which is mounted in a bearing block (32) and on a side carries a belt pulley (31), from which a toothed belt (30) is guided to a belt pulley (29) which is connected to a stub shaft (26) and a traction drive is formed, which serves for driving the fan cascade,
- the shaft mounted in the bearing block (32) carries a further belt pulley (35) which with a belt pulley (38) on the shaft (39) of the first radial fan (1; 20) and a toothed belt (37) forms a first traction drive,
- the shaft mounted in the bearing block (32) carries a further belt pulley (36) which with a belt pulley (41) on the shaft (42) of the second radial fan (7; 21) and a toothed belt (40) forms a second traction drive,
- and the bearing block (32) is arranged approximately at the height of the shafts (39; 42) of the first (1; 20) and of the second radial fan (7; 21), or below
**characterized in that**
between the outlet passage (8; 25) of the second (7; 21) and the suction passage (4; 24) of the first fan a connecting passage (9) is arranged, which is closed off by a bypass flap (15) during the operation of the fan cascade,
in the suction passage (4; 24) of the first radial fan (1; 20) or in the outlet passage of the second fan (7; 21) a start-up flap (13) or a slide are arranged, which can be actuated and make possible the entry of outside air or close the suction passage,
wherein the start-up flap (13) arranged in the suction passage (4) of the first fan (1; 20) or in the outlet passage (8) of the second fan (7; 21)
or the bypass flap (15) arranged in the connecting passage (9) can be individually or jointly actuated,
and the actuation of these can be carried out manually and/or with actuators supplied with auxiliary energy and/or with actuators actuated with auxiliary energy as a function of commands of a control unit.

2. The fan cascade for a suction excavator according to Patent Claim 1,
**characterized in that**
in the drive train (19) of the shaft arranged in the space between first (1; 20) and second radial fan (7; 21) and mounted in the bearing block (32) a fluid coupling (33) is arranged, the one coupling half of which is connected to the belt pulley (31) of the traction drive serving for driving the fan cascade and the other coupling half is connected to the belt pulley (35) of the first and the second belt pulley (36) of the second traction drive.

3. The fan cascade for a suction excavator according to any one of the Patent Claims 1 or 2,
**characterized in that**
the space between first (1; 20) and second radial fan (7; 21), in which the shaft and the first and the second traction drive as well as the drive shafts (39; 42) of the first (1; 20) and of the second radial fan (7; 21) are arranged, is closed off by a housing.

4. The fan cascade for a suction excavator according to Patent Claim 3,
**characterized in that**
the housing has an insulation.

5. The fan cascade for a suction excavator according to any one of the Patent Claims 3 or 4,
**characterized in that**
between the housing
and the suction passage (4; 24) of the first radial fan (1; 20) or the suction passage of the second radial fan (7; 21) there is a connection through which a venting of the interior space of the housing takes place,
wherein the housing is aerated via an opening arranged in the housing shell.

6. The fan cascade for a suction excavator according to any one of the Patent Claims 1 to 5,
**characterized in that**
for the first traction drive
and for the second traction drive
and/or for the traction drive between the belt pulley (29) on the stub shaft (26) and the belt pulley (31) flat belts, V-belts, grooved-belts, toothed-belts, chains or cords are employed.

## Revendications

1. Cascade de ventilateurs pour une drague suceuse avec un premier (1;20) ventilateur radial,
un deuxième ventilateur radial (7;21)
et un conduit de liaison (6) entre l'ouverture de soufflage (5) du premier (1;20) et l'ouverture de soufflage du deuxième ventilateur radial (7;21) pour laquelle
le premier (1;20) et le deuxième ventilateur radial (7;21) sont disposés l'un à côté de l'autre et de telle manière que leurs arbres d'entraînement :
- sont disposés sur le même côté
- et ont la même direction de rotation,
et une chaîne cinématique (19) qui est constituée comme suit :
- dans l'espace entre le premier (1;20) et le deuxième ventilateur radial (7;21) est disposé un arbre qui est logé dans un support de palier (32) et porte sur un côté une poulie à courroie (31), depuis laquelle une courroie crantée (30) est guidée vers une poulie à courroie (29) qui est reliée à un bout d'arbre (26) et un mécanisme de traction est constitué qui sert à l'entraînement de la cascade de ventilateurs,
- l'arbre logé dans le support de palier (32) porte une autre poulie à courroie (35) qui forme avec une poulie à courroie (38) sur l'arbre (39) du premier ventilateur radial (1;20) et une courroie crantée (37) un premier mécanisme de traction,
- l'arbre logé dans le support de palier (32) porte une autre poulie à courroie (36) qui forme avec une poulie à courroie (41) sur l'arbre (42) du deuxième ventilateur radial (7;21) et une courroie crantée (40) un deuxième mécanisme de traction,
- et le support de palier (32) est disposé à peu près à la hauteur des arbres (39;42) du premier (1;20) et du deuxième ventilateur radial (7;21) ou en dessous,
**caractérisée en ce qu'**entre le conduit d'évacuation (8;25) du deuxième (7 ;21) et le conduit d'aspiration (4;24) du premier ventilateur est disposé un conduit de liaison (9), qui est fermé par un volet de dérivation (15) lors du fonctionnement de la cascade de ventilateurs,
dans le conduit d'aspiration (4;24) du premier ventilateur radial (1;20) ou dans le conduit d'évacuation u deuxième ventilateur radial (7;21) sont disposés un volet d'arrivée (13) ou un coulisseau qui peuvent être actionnés et permettent l'accès de l'air extérieur ou ferment le conduit d'aspiration,
le volet d'arrivée (13) disposé dans le conduit d'aspiration (4) du premier ventilateur (1;20) ou dans le conduit d'évacuation (8) du deuxième ventilateur (7;21),
ou le volet de dérivation (15) disposé dans le conduit de liaison (9) pouvant être actionnés individuellement ou ensemble,
et leur actionnement pouvant être exécuté manuellement et/ou avec des organes de réglage sollicités par de l'énergie auxiliaire et/ou avec des organes de réglage actionnés par de l'énergie auxiliaire en fonction des ordres d'une unité de commande.

2. Cascade de ventilateurs pour une drague suceuse selon la revendication 1, **caractérisée en ce que** dans la chaîne cinématique (19) est disposée un accouplement hydraulique (33) sur l'arbre disposé dans l'espace entre le premier (1; 20) et le deuxième ventilateur radial (7; 21) et logé dans le support de palier (32), dont une moitié d'accouplement est reliée à la poulie à courroie (31) du mécanisme de traction servant à l'entraînement de la cascade de ventilateurs et dont l'autre moitié d'accouplement est reliée à la poulie à courroie (35) du premier et à la poulie à courroie (36) du deuxième mécanisme de traction.

3. Cascade de ventilateurs pour une drague suceuse selon l'une quelconque des revendications 1 ou 2, **caractérisée en ce que** l'espace entre le premier (1; 20) et le deuxième ventilateur radial (7; 21), dans lequel sont disposés l'arbre et le premier et le deuxième mécanisme de traction ainsi que les arbres d'entraînement (39; 42) du premier (1; 20) et du deuxième ventilateur radial (7; 21), est fermé par un carter.

4. Cascade de ventilateurs pour une drague suceuse selon la revendication 3, **caractérisée en ce que** le carter possède une isolation.

5. Cascade de ventilateurs pour une drague suceuse selon l'une quelconque des revendications 3 ou 4, **caractérisée en ce qu'**entre le carter et le conduit d'aspiration (4; 24) du premier ventilateur radial (1; 20) ou le conduit d'aspiration du deuxième ventilateur radial (7; 21) il existe une liaison à travers laquelle a lieu une désaération de l'espace intérieur du boîtier, le carter étant aéré par une ouverture disposée dans l'enveloppe de carter.

6. Cascade de ventilateurs pour une drague suceuse selon l'une quelconque des revendications 1 à 5, **caractérisée en ce que** des courroies plates, des courroies trapézoïdales, des courroies rainurées, des courroies crantées, des chaînes ou des cordons sont utilisés pour le premier mécanisme de traction et/ou pour le deuxième mécanisme de traction et/ou pour le mécanisme de traction entre la poulie à courroie (29) sur le bout d'arbre (26) et la poulie à courroie (31).
